# EUROPÄISCHE PATENTANMELDUNG

(11) **EP 3 943 269 A1**
(43) Veröffentlichungstag der Anmeldung: **26.01.2022**
(21) Anmeldenummer: 21180867.0
(22) Anmeldetag: 22.06.2021
(51) Int. Cl.: B29C 39/00, C04B 26/06, C08F 251/02, C08F 265/06, C08F 292/00, C08K 3/22, C08K 3/36, E03C 1/18

(54) **WÄRMEAUSHÄRTBARE BIOBASIERTE GIESSMASSE, HIERAUS HERGESTELLTER FORMKÖRPER SOWIE VERFAHREN ZUR HERSTELLUNG EINES SOLCHEN FORMKÖRPERS**

(30) Priorität: 22.07.2020 DE 102020119386
(71) Anmelder: Schock GmbH, 94209 Regen (DE)
(72) Erfinder: Datsyuk, Dr. Vitaliy, 94227 Zwiesel (DE); Orendorz, Dr. Adam, 94227 Zwiesel (DE); Achatz, Oskar, 94253 Bischofsmais (DE)
(74) Vertreter: Lindner Blaumeier Patent- und Rechtsanwälte

(57) **Zusammenfassung**

Wärmeaushärtbare biobasierte Gießmasse, umfassend:
(a) eine Mischung aus mehreren monofunktionellen Acryl- und/oder MethacrylMonomeren, wobei ein oder mehrere Monomere aus recyceltem Material und ein oder mehrere Monomere pflanzlichen oder tierischen Ursprungs sind,
(b) ein oder mehrere polyfunktionelle Acryl- und/oder Methacryl-Biomonomere pflanzlichen oder tierischen Ursprungs,
(c) ein oder mehrere Polymere oder Copolymere gewählt aus Polyacrylaten, Polymethacrylaten, Polyolen, Polyestern aus recyceltem Material oder pflanzlichen oder tierischen Ursprungs,
(d) anorganische Füllstoffpartikel natürlichen Ursprungs,
wobei der Anteil der monofunktionellen Acryl- und/oder Methacryl- Monomere und der polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

## Beschreibung

Die Erfindung betrifft eine wärmeaushärtbare biobasierte Gießmasse, geeignet für die Herstellung eines Formkörpers, bestehend aus einer aus der polymerisierten Gießmasse gebildeten Polymermatrix mit darin eingebetteten Füllstoffpartikeln. Ferner betrifft die Erfindung einen aus einer solchen Gießmasse hergestellten Formkörper, beispielsweise in Form einer Küchenspüle, eines Waschbeckens, einer Arbeitsplatte, einer Badewanne oder einer Duschwanne oder einer Arbeitsplatte, wobei die polymerisierte Gießmasse ein Bio-Kompositmaterial bestehend aus einer Polymermatrix mit eingebetteten Füllstoffpartikeln bildet.

Das erfindungsgemäße Bio-Kompositmaterial bzw. der erfindungsgemäße Formkörper wird hergestellt, indem zur Herstellung der erfindungsgemäßen Gießmasse zunächst anorganische Füllstoffpartikel in eine Lösung wenigstens eines Bio- und/oder recycelten-(Co)Polymers in einer Mischung aus recycelten und biobasierten mono- und polyfunktionellen Monomeren dispergiert wird, wonach die Gießmasse in eine Form eingespritzt wird, der Formhohlraum gefüllt wird und das Material gemäß der Hohlraumform durch Wärme fixiert wird über die wärmeinduzierte Polymerisation der monofunktionellen Bio-Monomere mit den polyfunktionellen Bio-Monomeren.

Es ist bekannt, Küchenspülen z.B. aus einer polymerisierten Gießmasse herzustellen. Eine solche Küchenspüle weist demzufolge eine Polymermatrix auf, in der zur Einstellung gewünschter Eigenschaften Füllstoffpartikel eingebettet sind. Die Gießmasse wird unter Verwendung geeigneter vernetzbarer Polymere hergestellt, wobei Polymere petrochemischen Ursprungs, also Polymere auf Erdölbasis verwendet werden. Zwar zeigen die derart hergestellten Küchenspülen sehr gute mechanische Eigenschaften und sind thermisch über einen großen Temperaturbereich stabil. Gleichwohl ist die Verwendung derartiger Polymere nicht zuletzt aus Gründen der Nachhaltigkeit (Umweltschutz & Ressourcenschonung) nachteilig.

Der Erfindung liegt daher das Problem zu Grunde, eine verbesserte Gießmasse anzugeben.

Zur Lösung des Problems ist eine wärmeaushärtbare biobasierte Gießmasse vorgesehen, umfassend:
(a) eine Mischung aus mehreren monofunktionellen Acryl- und/oder Methacryl-Monomeren, wobei ein oder mehrere Monomere aus recyceltem Material und ein oder mehrere Monomere pflanzlichen oder tierischen Ursprungs sind,
(b) ein oder mehrere polyfunktionelle Acryl- und/oder Methacryl-Biomonomere pflanzlichen oder tierischen Ursprungs,
(c) ein oder mehrere Polymere oder Copolymere gewählt aus Polyacrylaten, Polymethacrylaten, Polyolen, Polyestern aus recyceltem Material oder pflanzlichen oder tierischen Ursprungs,
(d) anorganische Füllstoffpartikel natürlichen Ursprungs,
wobei der Anteil der monofunktionellen Acryl- und/oder Methacryl-Monomere und der polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

Die erfindungsgemäße Gießmasse zeichnet sich dadurch aus, dass sie zu einem Großteil aus biologischen bzw. natürlichen Materialien insbesondere in Bezug auf die verwendeten, sich vernetzenden Stoffe besteht. Erfindungsgemäß wird eine Mischung aus verschiedenen monofunktionellen Monomeren verwendet. Erfindungsgemäß besteht die verwendete Mischung der monofunktionellen Acryl- und Methacryl-Monomere zu einem Teil aus recyceltem Material und zu einem Teil aus Monomeren pflanzlichen oder tierischen Ursprungs, wobei mindestens ein Monomer aus recyceltem und mindestens ein Monomer biobasiert ist, also pflanzlichen oder tierischen Ursprungs ist. Hier kommen also kaum petrochemisch gewonnene Polymere zum Einsatz, abgesehen von dem recycelten Anteil, der aber auch gegebenenfalls aus recyceltem biobasierten Material besteht. In jedem Fall wird im Umfang des recycelten monofunktionellen Monomeranteils kein petrochemisch basiertes Neumaterial verwendet. Als polyfunktionelle Monomere werden ausschließlich Monomere pflanzlichen oder tierischen Ursprungs verwendet. Soweit Monomere, seien es monofunktionelle oder polyfunktionelle Monomere, pflanzlichen oder tierischen Ursprungs verwendet werden, können diese als "Bio-Monomere" bezeichnet, werden, wobei ein Bio-Monomer ein Monomer eines Bio-Polymers ist. Der Begriff "polyfunktionell" umfasst bi-, tri- und höherfunktionelle Bio-Monomere.

Die verwendeten Polymere oder Copolymere sind vorzugsweise ebenfalls rein pflanzlichen oder tierischen Ursprungs, d.h., dass auch diese Stoffe nicht petrochemischen Ursprungs sind. Hier besteht jedoch alternativ zur Verwendung von Stoffen pflanzlichen/tierischen Ursprungs auch die Möglichkeit, Polymere oder Copolymere aus Recyclingmaterial zu verwenden. Zwar ist dieses Material zumeist petrochemischen Ursprungs, jedoch wird kein Neumaterial verwendet, sondern ein bereits vorhandenes, jedoch recyceltes Material wiederverwendet, was aus Umweltgesichtspunkten ebenfalls vorteilhaft ist. Durch den Einsatz von Bio-Monomeren und Reyclingmaterial werden innerhalb der erfindungsgemäßen Gießmasse selbst im Bindemittel bisher verwendete Stoffe auf petrochemischer Basis durch nachhaltige Materialien vollständig ersetzt. Bevorzugt natürlich werden auch Polymere bzw. Copolymere rein pflanzlichen oder tierischen Ursprungs verwendet, so dass sich in diesem Falle eine, abgesehen von dem monofunktionellen recycelten Monomeranteil, vollständig auf natürlichen Materialien bestehende Gießmasse ergibt, da wie beschrieben auch die Füllstoffe rein natürlichen Ursprungs sind. Damit handelt es sich bei dem aus der erfindungsgemäßen Gießmasse hergestellten Formkörper folglich um einen Bio-Formkörper, der überwiegend aus biologischen, also natürlichen Materialien besteht. Die Herstellung des Bio-Verbundwerkstoffs oder Bio-Kompositwerkstoffs aus den Füllstoffpartikeln und den sich vernetzenden Materialien, die aus erneuerbaren Quellen hergestellt werden, reduziert den Verbrauch der petrochemisch hergestellten Materialien und damit den Erdölverbrauch und wirkt sich positiv auf die Umwelt aus.

Als monofunktionelle Acryl- und/oder Methacryl-Biomonomere pflanzlichen oder tierischen Ursprungs, als polyfunktionelle Acryl- und/oder Methacryl-Biomonomere pflanzlichen oder tierischen Ursprungs, und als biobasierte Polymere oder Copolymere gewählt aus Polyacrylaten, Polymethacrylaten, Polyolen, Polyestern pflanzlichen oder tierischen Ursprungs werden vorliegend solche gemäß IUPAC Recommendations 2012, Pure Appl. Chem. Vol. 84, No. 2, pp. 377-410, 2012 "Terminology for biorelated polymers and applications (IUPAC Recommendations 2012)" (http://publications.iupac.org/pac/pdf/2012/pdf/8402x0377.pdf) verstanden, wonach gemäß Definition auf Seite 381 der Begriff "biobased" (also "biobasiert") als "Composed or derived in whole or in part of biological products issued from the biomass (including plant, animal, and marine or forestry materials" definiert wird, d.h., dass auch die Verwendung eines biobasierten (pflanzlichen oder tierischen) Vorprodukts oder Ausgangsstoffs zur Herstellung eines entsprechenden biobasierten, also einen pflanzlichen oder tierischen Ursprung aufweisenden Monomers bzw. Polymers bzw. Copolymers führt.

Trotz Verwendung von überwiegend natürlichen Materialien zur Herstellung der Gießmasse bzw. des Formkörpers, also z.B. einer Küchenspüle, hat sich überraschend herausgestellt, dass der Formkörper sehr gute, teilweise sogar noch bessere mechanische Eigenschaften, insbesondere hinsichtlich der Schlagzähigkeit oder der Kratzfestigkeit im Vergleich mit einer bekannten, aus petrochemisch gewonnenen vernetzenden Materialien hergestellten Gießmasse bzw. einem derartigen Formkörper zeigt.

Die Herstellung von Bio-Komposit-Formkörpern, wie Küchenspülen, Duschwannen, Badewannen, Waschbecken und Arbeitsplatten, aus hochwertigen mono- und polyfunktionellen Bio-Acrylat- und Bio-Methacrylatmonomeren ermöglicht es, hohe technische Leistungsanforderungen und einen erhöhten Bio Renewable Carbon Content (BRC) (Anteil an erneuerbarem Kohlenstoff bzw. der biobasierte Kohlenstoffgehalt) in Produkten zu kombinieren. Es gibt eine Vielzahl von verschiedenen bioverfügbaren Quellen zur Herstellung von mono- und polyfunktionellem Bio-Acrylat- und Bio-Methacrylatmonomeren, wie z.B. Pflanzenöl, tierisches Fett, Holz. Ein BRC in Biomonomeren kann bis zu 90 % erreicht werden.

Der Formkörper aus dem Bio-Kompositmaterial besteht aus der Mischung des anorganischen Füllstoffs, der über einen vernetzenden Polymerisationsprozess der mono- und polyfunktionellen Monomere in die Polymermatrix eingebettet ist und durch die Verwendung der nachwachsenden Rohstoffe die große Nachhaltigkeitswirkung erzielt.

Das Gewichtverhältnis von monofunktionellen Monomeren zu polyfunktionellen Biomonomeren sollte erfindungsgemäß 2 : 1 bis 80 : 1, vorzugsweise 4 : 1 bis 70 : 1, insbesondere 5 : 1 bis 60 : 1 betragen.

Es kann ein monofunktionelles Monomer in Form eines recycelten Acrylats oder eines biobasierten Acrylats pflanzlichen oder tierischen Ursprungs verwendet werden. Diese kann gewählt werden aus n-Butylacrylat, Methylacrylat, Ethylacrylat, tert.-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy)Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropan-Formalacrylat, ethoxyliertes 4-Laurylacrylat, Polyesteracrylat, Stearylacrylat, hyperverzweigtes Polyesteracrylat, Melaminacrylat, Silikonacrylat, Epoxyacrylat.

Ferner kann ein monofunktionelles Monomer in Form eines recycelten Methacrylats oder eines biobasierten Methacrylats pflanzlichen oder tierischen Ursprungs verwendet werden. Dieses kann gewählt werden aus Methylmethacrylat, Ethylmethacrylat, n-Butylmethacrylat, Isobutylmethacrylat, tert-Butylmethacrylat, Behenylmethacrylat, Ehenylpolyethylenglykolmethacrylat, Cyclohexylmethacrylat, Isodecylmethacrylat, 2-Ethylhexylmethacrylat, Laurylmethacrylat, Stearylmethacrylat, Stearylpolyethylenglykolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglykolmethacrylat, Glycedylmethacrylat, Hexylethylmethacrylat, Glycerolformalmethacrylat, Lauryltetradecylmethacrylat, C17,4-Methacrylat.

Ein polyfunktionelles Biomonomer kann in Form eines biobasierten Acrylats, also eines Acrylats pflanzlichen oder tierischen Ursprungs verwendet werden. Dieses kann gewählt werden aus 1,6 Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, DiPentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxidiertes Sojaöldiacrylat.

Ferner kann ein polyfunktionelles Biomonomer in Form eines biobasierten Methacrylates, also eines Methacrylats pflanzlichen oder tierischen Ursprungs verwendet werden. Dieses kann gewählt werden aus Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A Dimethacrylat, Trizyclodecandimethanoldimethacrylat, Trimethylolpropantrimethacrylat.

Erfindungsgemäß sollte das Gewichtsverhältnis von mono- oder polyfunktionellen Acrylaten und/oder Methacrylaten zu dem oder den Polymeren oder Copolymeren, insbesondere gewählt aus Polyacrylaten, Polymethacrylaten, Polyolen oder Polyesteren 90:10 bis 60:40, vorzugsweise 85:15 bis 70:30 betragen.

Auch die anorganischen Füllstoffpartikel sind natürlichen, also biologischen Ursprungs und nicht synthetisch hergestellt. Sie können gewählt werden aus SiO₂, Al₂O₃, TiO₂, ZrO₂, Fe₂O₃, ZnO, Cr₂O₅, Kohlenstoff, Metallen oder Metalllegierungen, wobei auch Mischungen zweier oder mehrerer verschiedener Füllstoffpartikelarten verwendet werden können. Das Mischungsverhältnis kann beliebig sein.

Dabei sollten die anorganische Füllstoffpartikel eine Partikelgröße von 0,010 bis 8000 µm, vorzugsweise 0,05 bis 3000 µm, und insbesondere 0,1 bis 1300 µm aufweisen. Ferner sollten die anorganische Füllstoffpartikel ein Seitenverhältnis von 1,0 bis 1000 (Länge : Breite der Einzelpartikel) aufweisen.

Für eine einfache Verarbeitbarkeit sollte die Viskosität der erhaltenen Gießmasse so eingestellt sein, dass die Gießmasse mittels einer geeigneten Spritzvorrichtung unter Druck in eine Form, deren Formkavität vollständig ausfüllend, eingespritzt werden kann.

Neben der Gießmasse betrifft die Erfindung einen Formkörper, der aus der erfindungsgemäßen Gießmasse hergestellt ist. Da die Gießmasse Bio-Monomere, Bio-Polymere und Bio-Copolymere enthält, handelt es sich folglich beim Formkörper um einen Bio-Kompositkörper, also z.B. eine Bio-Komposit-Küchenspüle o.dgl..

Dabei können unterschiedliche Formkörpertypen hergestellt werden. So kann es sich bei dem Formkörper um eine Küchenspüle, eine Duschwanne, ein Waschtisch, eine Badewanne, eine Arbeitsplatte oder ein Boden-, Wand- oder Deckenpaneel handeln, wobei diese Aufzählung nicht abschließend ist.

Wie bereits beschrieben, hat sich gezeigt, dass die erhaltenen Formkörper trotz Verwendung biobasierter Ausgangsmaterialien, aus denen die Gießmasse besteht, sehr gute Eigenschaften, insbesondere mechanische Eigenschaften aufweisen. Das polymerisierte Bio-Kompositmaterial des Formkörpers sollte eine Schlagfestigkeit von 2 bis 5 mJ/mm² aufweisen, wie es auch eine thermische Stabilität -30 bis 300 °C aufweisen sollte.

Ein vorstehend beschriebener Vorteil der Erfindung ist, dass die Verwendung von einem, zwei oder mehreren monofunktionalen Biomonomeren es ermöglicht, die thermischen, mechanischen und Oberflächeneigenschaften des Endprodukts, also des fertigen Formkörpers, entsprechend den Produktanforderungen zu variieren. Die Schlagzähigkeit kann z.B. durch Zugabe von Bio-Laurylmethacrylatmonomer mit guter Flexibilität verbessert werden.

Die Konzentration des Bio-Laurylmethacrylats im Bio-Kompositmaterial beträgt vorzugsweise ca. 0,5 bis ca. 10 Gew.-%, insbesondere von 0,7 bis 5,0 Gew.-%. Es wurde festgestellt, dass eine geringe Menge an flexiblem Bio-Laurylmethacrylat zu einer Verbesserung der Schlagzähigkeit führt.

Ein weiterer vorstehend beschriebener Vorteil der Erfindung ist, dass die thermische Beständigkeit des fertigen Formkörpers z.B. durch Zugabe von Bio-Isobornylmethacrylatmonomer mit erhöhter thermischer Stabilität verbessert werden kann.

Die Konzentration des Bio-Isobornylmethacrylats im Bio-Kompositmaterial beträgt vorzugsweise ca. 1,0 bis ca. 20 Gew.-%, insbesondere von 2,0 bis 17,0 Gew.-%. Es wurde festgestellt, dass eine geringe Menge an Bio-Isobornylmethacrylat zu einer Verbesserung der Kratzfestigkeit führt.

Ein weiterer Vorteil der Erfindung ist, dass die Alterungsbeständigkeit z.B. durch Zugabe von Bio-Isobornylacrylatmonomer mit verbesserter Witterungsbeständigkeit verbessert werden kann. Die Konzentration des Bio-Isobornylacrylats im Bio-Kompositmaterial beträgt vorzugsweise ca. 1,0 bis ca. 10 Gew.-%, insbesondere von 2,0 bis 7,0 Gew.-%. Es wurde festgestellt, dass eine geringe Menge an Bio-Isobornylacrylat zu einer Verbesserung der Alterungsbeständigkeit führt.

Ein weiterer Vorteil der Erfindung ist, dass die chemische Beständigkeit z.B. durch Zugabe von Bio-(1,10-Decandioldiacrylat) bifunktionellem Monomer verbessert wird. Die Konzentration des Bio-(1,10-Decandioldiacrylats) im Bio-Kompositmaterial beträgt vorzugsweise ca. 0,15 bis ca. 10 Gew.-%, insbesondere von 0,3 bis 5,0 Gew.-%. Es wurde festgestellt, dass eine geringe Menge an Bio-(1,10-Decandioldiacrylat) zu einer Verbesserung der chemischen Beständigkeit führt.

Ein weiterer Vorteil der Erfindung ist, dass die Füllstoffdispersion z.B. durch Zugabe von Bio-(propoxyliertem (3) Glyceryltriacrylat) trifunktionellem Monomer auf Grund einer sehr guten Füllstoffbenetzung erhöht wird. Die Konzentration des Bio-(propoxylierten (3) Glyceryltriacrylats) im Bio-Kompositmaterial beträgt vorzugsweise von etwa 0,1 bis etwa 5 Gew.-%, insbesondere von 0,3 bis 2,0 Gew.-%. Es wurde festgestellt, dass eine geringe Menge an Bio-(propoxyliertem (3) Glyceryltriacrylat) zu einer Verbesserung der Füllstoffverteilung in einer Matrix und zu den verbesserten thermischen und mechanischen Eigenschaften führt.

Ein weiterer Vorteil der Erfindung ist, dass die Abriebfestigkeit der Bio-Kompositmasse des Formgegenstands z.B: durch Zugabe von Bio-Polyethylenglykoldimethacrylat bifunktionellem Monomer mit erhöhter Abriebfestigkeit verbessert werden kann. Die Konzentration des Bio-Polyethylenglykoldimethacrylats im Bio-Kompositmaterial beträgt vorzugsweise von ca. 0,1 bis ca. 10 Gew.-%, insbesondere von 0,3 bis 5,0 Gew.-%. Es wurde festgestellt, dass eine geringe Menge an Bio-Polyethylenglykoldimethacrylat zu einer Verbesserung der Abriebfestigkeit führt.

Ein weiterer Vorteil der Erfindung ist, dass die Kraftzfestigkeit des Formkörpers z.B. durch Zugabe von Bio-Dipentaerythritolpentaacrylat polyfunktionellem Monomer mit erhöhter Kratzfestigkeit verbessert werden kann. Die Konzentration des Bio-Dipentaerythritolpentaacrylats im Bio-Kompositmaterial beträgt vorzugsweise ca. 0,1 bis ca. 7 Gew.-%, insbesondere von 0,3 bis 5,0 Gew.-%. Es wurde festgestellt, dass eine geringe Menge an Bio-Dipentaerythritolpentaacrylat zu einer Verbesserung der Kratzfestigkeit führt.

Anorganische Füllstoffe können in Form von SiO₂ in Form von Quarzpartikeln, Cristobalitteilchen, pyrogenen Kieselsäurepartikeln, belüfteten Kieselsäurepartikeln, Kieselfasern, Kieselsäurefibrillen, Silikatpartikeln, wie Schichtsilikaten; Al₂O₃-Partikeln, TiO₂-Partikeln, Fe₂O₃-Partikeln, ZnO-Partikeln, Cr₂O₅-Partikeln, Rußpartikeln, Kohlenstoff Nanoröhren - Partikeln, Graphitpartikeln oder Graphenpartikeln verwendet werden.

Um die ausgezeichnete stabile Dispersion des anorganischen Füllstoffs in der Polymermatrix zu erhalten, kann die Monomermischung zur Einstellung einer geeigneten Viskosität eine biobasierte Zusammensetzung von Polymeren und/oder Copolymeren aus recycelten oder biobasierten Ressourcen enthalten.

Ferner betrifft die Erfindung ein Verfahren zur Herstellung eines Formkörpers der vorstehend beschriebenen Art, bei dem eine Gießmasse der ebenfalls vorstehend beschriebenen Art verwendet wird, die in eine Form gegeben wird, in der sie bei gegenüber Raumtemperatur erhöhter Temperatur polymerisiert, wonach der polymerisierte Formkörper der Form entnommen wird und abkühlt.

Dabei sollte die Temperatur während der Polymerisation zwischen 60 - 140°C, vorzugsweise zwischen 75 - 130°C und insbesondere 80 -110°C betragen.

Ferner sollte die Haltezeit, während der die Gießmasse zur Polymerisation in der Form bleibt, zwischen 15 - 50 min, vorzugsweise 20 - 45 min und insbesondere 25 - 35 min betragen.

Die Herstellung des Formkörpers aus der wärmehärtbaren biobasierten Gießmasse ist ein mehrstufiger Prozess, der Folgendes umfasst
- Herstellung von Polymermatrixkomponenten
- Dispersion von anorganischen Füllstoffen in einer Polymermatrix
- Vernetzungspolymerisation von Küchenspülen, Waschbecken, Badewannen, Arbeitsplatten.

Nachfolgend werden mehrere Versuchsbeispiele zur näheren Darstellung der erfindungsgemäßen Gießmasse, des erfindungsgemäßen Formkörpers und des erfindungsgemäßen Verfahrens gegeben.

### Beispiel 1:

Herstellung von Polymermatrixkomponenten aus verschiedenen monofunktionellen Monomeren

Verwendete Komponenten:
(a) Monofunktionelle Monomere:
   Monofunktionelle biobasierte Monomere:
      Isobornylmethacrylat (IBOMA, Evonik Performance Materials GmbH),
      Laurylmethacrylat (LMA, Arkema France), Isobornylacrylat (IBOA; Miwon Specialty Chemical Co., Ltd), Ethyl Methacrylat (BCH Brühl Chemikalien Handel GmbH)
      Diese Komponenten entstammen alle pflanzlichen oder tierischen Ursprungs, beispielweise wird VISIOMER^{®} Terra IBOMA aus Kieferharz hergestellt.
   Monofunktionelles recyceltes Monomer:
      Monofunktionelles recyceltes Monomermethacrylat (rec.-MMA, Monómeros del Vallés, S.L.)
(b) Polyfunktionale Monomere:
   1,10-(Decandioldiacrylat) (Arkema France)
(c) Polymere:
   Acrylglas-Feinmahlgut XP 85 (recyceltes PMMA, Kunststoff- und Farben-GmbH) und Aqualon EC-N100 0100 (biobasierte Ethyl-Cellulose, Ashland Industrie Deutschland GmbH)
(d) Füllstoff:
   SiO₂ [80 % Quarz Partikelgroße 0.06 - 0.3 mm (Dorfner GmbH); 20 % Quarzmehl, Partikelgroße 0.1 - 0.70 µm (Quarzwerke GmbH) und TiO₂-Partikel (Crystal International B.V.)
(e) Additive:
   Biobasierte Dispergieradditive (0.1 %) (BYK Chemie GmbH) und Thixotropieadditive (0,1 %) (BYK Chemie GmbH)

Die Zusammensetzungen für die Herstellung von Polymermatrizen werden durch Lösen von Acrylglas - Feinmahlgut XP 85 (recyceltes PMMA, Kunststoff- und Farben-GmbH) und Aqualon EC-N100 0100 (biobasierte Ethyl-Cellulose als Biopolymer, Ashland Industrie Deutschland GmbH) in der Mischung aus monofunktionellen Monomeren von Tabelle 1: Isobornylmethacrylat (Evonik Performance Materials GmbH), Laurylmethacrylat LMA, Arkema France), Isobornylacrylat (Miwon Specialty Chemical Co., Ltd), Ethyl Methacrylat (BCH Brühl Chemikalien Handel GmbH) hergestellt. Das Reaktionsgemisch wurde auf 40 °C erhitzt, um die Löslichkeit für 100 min bis zum Erhalt einer klaren Lösung zu beschleunigen. Zum Vergleich der Matrixkomponenten wurden die Zusammensetzungen vorbereitet und in Tabelle 1 zusammengefasst:

**Tabelle 1:**

| Monofunktionelle Monomere | Muster 1 | Muster 2 | Muster 3 |
|---|---|---|---|
| Recyceltes Methylmethacrylat | 62 | 50 | 35 |
| Laurylmethacrylat | 38 | 38 | |
| Isobornylacrylat | | | 28 |
| Isobornylmethacrylat | 0 | 12 | 12 |
| Ethylmethacrylat | | | 25 |

Alle Muster aus Tabelle 1 wurden als Lösungsmittel für Acrylglas-Feinmahlgut XP 85 und Aqualon EC-N100 011 (95:5) in einem Verhältnis von 80:20 zur Erhöhung der Viskosität der Reaktionsmasse verwendet (von 120 bis 155 cPs, Brookfield Viscometer DVI Prime) gefolgt von einer Zugabe von 20 Gew.-% Bio-(1,10-Decandioldiacrylat) (Arkema France).

Die klare Lösung aus Acrylglas-Feinmahlgut XP85 und Aqualon EC-N100 011 Mischung in den Proben 1 - 3 mit Zusatz von Bio-(1,10-DDDA) wurde zur Dispersion einer Mischung aus anorganischen Füllstoffen (70 Gew.-%) verwendet, die 95 Gew.-% SiO₂ [80 % Quarz Partikelgroße 0.06 - 0.3 mm (Dorfner GmbH), 20 % Quarzmehl, Partikelgroße 0.1 - 0.70 µm (Quarzwerke GmbH)] und 5 % TiO₂-Partikel (Crystal International B.V.) enthält. Ferner wurde eine bio-basierte Dispergierung Additive (0.1 %) (BYK Chemie) und Thixotropieadditive (0,1 %) (BYK Chemie) zugegeben. Die derart hergestellte Gießmasse wurde für 20 Minuten gerührt (Dispermat AE-3M, VMA-Getzmann GmbH). Aus der Gießmasse wurde ein Formkörper in Form einer Küchenspüle hergestellt, indem die Gießmasse in eine Form gegossen und 35 Minuten lang bei 110 °C polymerisiert wurde.

Mechanische und thermische Eigenschaften der Küchenspülen aus der Probe 1 - 3.

**Tabelle 2:**

| Eigenschaften | Muster 1 | Muster 2 | Muster 3 | Vergleichsspüle |
|---|---|---|---|---|
| Schlagzähigkeit mJ/mm² | 3,2 | 2,7 | 2,9 | 2,3 |
| Kratzbeständigkeit | + | + | + | + |
| Taber-Abrieb, µg | 10 | 15 | 14 | 12 |
| Wärmewiderstand* | + | + | + | + |
| Temperaturwechselbeständigkeit** | + | + | + | + |

Für die Schlagzähigkeit Messungen werden 12 Proben der Größe 80 x 6 mm aus der Spüle geschnitten. Die Messungen werden am ZwickRoell HIT P Gerät durchgeführt.

Für die Kratzbeständigkeit Messungen werden eine Probe (100 x 100 mm) geschnitten und Topografie vor und nach Kratzen wurde gemessen (Mitutoyo Surftest SJ 500P).

Für Taber-Abrieb Test werden eine Probe (100 x100 mm) geschnitten und Abriebtest am Elcometer 1720 durchgeführt.
* Das Verfahren basiert auf der Prüfvorschrift DIN EN 13310, bei der der Prüfling mit der Temperatur 180°C für 20 min in der Mitte der Küchenspüle platziert wird, ohne sichtbare Veränderungen an der Oberfläche der Spüle zu hinterlassen.
** Das Verfahren basiert auf der Prüfvorschrift DIN EN 13310, bei der die Spüle für 1000 Zyklen mit kaltem - heißem Wasser behandelt wird. Heißes Wasser, T=90 °C, fließt 90 Sekunden lang in die Spüle, gefolgt von einer Entspannung für 30 Sekunden, mit weiter fließendem Kaltwasser (T= 15 °C) für die nächsten 90 Sekunden. Der Zyklus wird durch eine Entspannung für 30 Sekunden beendet.

Der Verbundwerkstoff für die Vergleichsspüle wurde unter Verwendung organischer Verbindungen petrochemischen Ursprungs gemäß Patentanmeldung DE 38 32 351 A1 hergestellt.

Die Tabelle zeigt, dass alle Versuchsbeispiele gemessene Eigenschaften zeigen, die mindestens denen der bekannten Vergleichsspüle, die aus nicht-biobasierten Komponenten, was die Monomere und Polymere angeht, besteht, entsprechen bzw. in den meisten Fällen sogar besser sind als bei der Vergleichsspüle. Insbesondere die Schlagzähigkeit ist bei den Mustern 1-3 zum Teil signifikant verbessert.

### Beispiel 2:

Herstellung von Polymermatrixkomponenten mit verschiedenen polyfunktionellen Monomeren

Verwendete Komponenten:
(a) Monofunktionelle Monomere:
   Recyceltes MMA und biobasiertes LMA im Verhältnis 62:38 (recyceltes Monomer Methacrylat (rec.-MMA, Monómeros del Vallés, S.L.) und als Bio-Monomer Laurylmethacrylat (LMA, Arkema France))
(b) Polyfunktionelle Monomere:
   1,10-(Decandioldiacrylat), propoxyliertes (3) Glyceryltriacrylat (Arkema France), Polyethylenglykoldimethacrylat (Arkema France) und epoxydiertes Sojaöldiacrylat (Miwon Specialty Chemical Co., Ltd)
(c) Polymer:
   Acrylglas-Feinmahlgut XP 85 (recyceltes PMMA (Kunststoff- und Farben GmbH) und Aqualon EC-N100 0100 (Ethyl Cellulose, Ashland Industrie Deutschland GmbH)
(d) Füllstoff:
   SiO₂ [80 % Quarz Partikelgroße 0.06 - 0.3 mm (Dorfner GmbH); 20 % Quarzmehl, Partikelgroße 0.1 - 0.70 µm (Quarzwerke GmbH)] und TiO₂-Partikel (Crystal International B.V.)
(e) Additive:
   Biobasierte Dispergierung Additive (0.1 %) (BYK Chemie GmbH) und Thixotropieadditive (0,1 %) (BYK Chemie GmbH)

Die Zusammensetzungen für die Herstellung von Polymermatrizen werden durch Lösen von Acrylglas-Feinmahlgut XP 85 (recyceltes PMMA (Kunststoff- und Farben GmbH) und Aqualon EC-N100 0100 (Ethyl Cellulose, Ashland Industrie Deutschland GmbH) in der Mischung aus monofunktionellen Monomeren rec. MMA und LMA im Verhältnis 62:38 hergestellt. Das Reaktionsgemisch wurde auf 40 °C erhitzt, um die Löslichkeit auf 150 min zu beschleunigen, gefolgt von der Zugabe der polyfunktionellen Monomere: 1,10 DDDA, propoxyliertes (3) Glyceryltriacrylat (Arkema France), Polyethylenglykoldimethacrylat (PEG-DMA, Arkema France), epoxidiertes Sojaöldiacrylat (Miwon Specialty Chemical Co., Ltd), um die Zusammensetzung zur Bildung der Polymermatrix zu finalisieren. Zum Vergleich der Matrixkomponenten wurden die Zusammensetzungen aus verschiedenen polyfunktionellen Monomeren hergestellt und in Tabelle 3 zusammengefasst. Die Konzentration der polyfunktionellen Monomere wird in Gew.-% auf die Menge der monofunktionellen Monomere angegeben:

**Tabelle 3:**

| Polyfunktionelle Biomonomere | Muster 4 | Muster 5 | Muster 6 |
|---|---|---|---|
| 1.10-Decandioldiacrylat | 14 | | |
| propoxylierte (3) Glyceryltriacrylat | 14 | 5 | |
| Polyethylenglycoldimethacrylat | | 10 | 10 |
| epoxidiertes Sojaöldiacrylate | | | 5 |

Mechanische und thermische Eigenschaften der Küchenspülen aus Proben 4 - 6

**Tabelle 4:**

| Eigenschaften | Muster 4 | Muster 5 | Muster 6 | Vergleichsspüle |
|---|---|---|---|---|
| Schlagzähigkeit mJ/mm² | 3,1 | 3,5 | 2,8 | 2,3 |
| Kratzbeständigkeit | + | + | + | + |
| Taber-Abrieb, µg | 15 | 11 | 18 | 12 |
| Wärmewiderstand* | + | + | + | + |
| Temperaturwechselbeständigkeit** | + | + | + | + |

Die Messwerte der Tabelle 4 zeigen, dass auch innerhalb dieser Untersuchungsbeispiele die Formkörper zum Teil erheblich verbesserte mechanische Eigenschaften, insbesondere hinsichtlich der Schlagzähigkeit und der Kratzbeständigkeit zeigen. D.h., dass durch die Verwendung der biobasierten Ausgangsstoffe nicht nur eine aus Umweltsicht zweckmäßige Verbesserung erreicht wird, sondern auch eine Verbesserung insbesondere der mechanischen Eigenschaften der Formkörper.

### Beispiel 3:

Herstellung von Polymermatrixkomponenten mit verschiedenen Recycling- oder Biopolymeren

Verwendete Komponenten:
(a) Monofuntionelle Monomere:
   Recyceltes MMA und biobasiertes LMA im Verhältnis 62:38 (recyceltes Monomer Methacrylat (rec. MMA, Monómeros del Vallés, S.L.) und Laurylmethacrylat (LMA, Arkema France))
   Polyfunktionelle Biomonomere:
   Bio-(1,10-Decandioldiacrylat) (Arkema France) und propoxyliertes (3) Glyceryltriacrylat (Arkema France) im Verhältnis 14:14.
(b) Polymer:
   Recycelte Polymere und Biopolymere und Biocopolymere: recyceltes PMMA (Kunststoff- und Farben-GmbH), Rizinusölpolymer (D.O.G Deutsche Oelfabrik Ges. f. chem. Erz. mbH & Co.KG)
(d) Füllstoff:
   SiO₂ [80 % Quarz Partikelgroße 0.06 - 0.3 mm (Dorfner GmbH); 20 % Quarzmehl, Partikelgroße 0.1 - 0.70 µm (Quarzwerke GmbH)] und TiO₂-Partikel (Crystal International B.V.)
(e) Additive:
   Biobasierte Dispergieradditive (0.1 %) (BYK Chemie) und Thixotropieadditive (0,1 %) (BYK Chemie)

Die Zusammensetzungen für die Herstellung von Polymermatrizen werden durch Lösen von recyceltem Polymer und/oder Biopolymer und/oder Biocopolymer (recyceltes PMMA (Kunststoff- und Farben-GmbH), Rizinusölpolymer (D.O.G Deutsche Oelfabrik Ges. f. chem. Erz. mbH & Co.KG) in der Mischung aus monofunktionellen Monomeren rec. MMA und LMA im Verhältnis 68:32 hergestellt. Das Reaktionsgemisch wurde auf 40 °C erhitzt, um die Löslichkeit für 100 min zu beschleunigen, gefolgt von der Zugabe von Bio-(1,10-Decandioldiacrylat) (Arkema France) und propoxyliertes (3) Glyceryltriakrylat (Arkema France) im Verhältnis 14:14, um die Zusammensetzung zur Bildung der Polymermatrix zu finalisieren. Zum Vergleich der Matrixkomponenten wurden die Zusammensetzungen aus verschiedenen recycelten Polymeren und Biopolymeren hergestellt und in Tabelle 5 zusammengefasst. Die Konzentration des Biopolymers wird in Gew.-% auf die Menge der monofunktionellen Monomere angegeben:

**Tabelle 5:**

| Polymer | Muster 7 |
|---|---|
| recyceltes PMMA | 19 |
| Rizinusölpolymer | 5 |

Küchenspülen wurden nach dem in Beispiel 1 beschriebenen Verfahren hergestellt.

Mechanische und thermische Eigenschaften der Küchenspüle aus der Probe 7.

**Tabelle 6:**

| Eigenschaften | Muster 7 | Vergleichsspüle |
|---|---|---|
| Schlagzähigkeit mJ/mm² | 2,7 | 2,3 |
| Kratzbeständigkeit | + | + |
| Taber-Abrieb, µg | 16 | 12 |
| Wärmewiderstand* | + | + |
| Temperaturwechsel -beständigkeit** | + | + |

## Patentansprüche

1. Wärmeaushärtbare biobasierte Gießmasse, umfassend:
(a) eine Mischung aus mehreren monofunktionellen Acryl- und/oder Methacryl-Monomeren, wobei ein oder mehrere Monomere aus recyceltem Material und ein oder mehrere Monomere pflanzlichen oder tierischen Ursprungs sind,
(b) ein oder mehrere polyfunktionelle Acryl- und/oder Methacryl-Biomonomere pflanzlichen oder tierischen Ursprungs,
(c) ein oder mehrere Polymere oder Copolymere gewählt aus Polyacrylaten, Polymethacrylaten, Polyolen, Polyestern aus recyceltem Material oder pflanzlichen oder tierischen Ursprungs,
(d) anorganische Füllstoffpartikel natürlichen Ursprungs,
wobei der Anteil der monofunktionellen Acryl- und/oder Methacryl-Monomere und der polyfunktionellen Acryl- und Methacryl-Biomonomere 10 - 40 Gew.-%, der Anteil des oder der Polymere oder Copolymere 1 - 16 Gew.-% und der Anteil der anorganischen Füllstoffpartikel 44 - 89 Gew.-% beträgt.

2. Gießmasse nach Anspruch 1, wobei das Gewichtverhältnis von monofunktionellen Monomeren zu polyfunktionellen Biomonomeren 2 : 1 bis 80 : 1, vorzugsweise 4 : 1 bis 70 : 1, insbesondere 5 : 1 bis 60 : 1 beträgt.

3. Gießmasse nach Anspruch 1 oder 2, wobei die monofunktionellen Monomere gewählt sind aus recycelten Acrylaten und Acrylaten pflanzlichen oder tierischen Ursprungs, nämlich n-Butylacrylat, Methylacrylat, Ethylacrylat, tert-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy) Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropanformalacrylat, ethoxyliertes 4-Laurylacrylat, Polyesteracrylat, Stearylacrylat hyperverzweigtes Polyesteracrylat, Melaminacrylat, Silikonacrylat, Epoxyacrylat, und aus recycelten Methacrylaten und Methacrylaten pflanzlichen oder tierischen Ursprungs , nämlich Methylmethacrylat, Ethylmethacrylat, n-Butylmethacrylat, Isobutylmethacrylat, tert-Butylmethacrylat, Behenylmethacrylat, Ehenylpolyethylenglykolmethacrylat, Cyclohexylmethacrylat, Isodecylmethacrylat, 2-Ethylhexylmethacrylat, Laurylmethacrylat, Stearylmethacrylat, Stearylpolyethylenglykolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglykolmethacrylat, Glycedylmethacrylat, Hexylethylmethacrylat, Glycerolformalmethacrylat, Lauryltetradecylmethacrylat, C17,4-Methacrylat.

4. Gießmasse nach einem der vorangehenden Ansprüche, wobei das oder die polyfunktionellen Biomonomere gewählt sind aus Acrylaten pflanzlichen oder tierischen Ursprungs, nämlich 1,6-Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, DiPentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxydierte Sojaöldiacrylat und aus den polyfunktionellen Methacrylaten pflanzlichen oder tierischen Ursprungs, nämlich Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A-Dimethacrylat, Trizyclodecandimethanoldimethacrylat, Trimethylolpropantrimethacrylat.

5. Gießmasse nach einem der vorangehenden Ansprüche, wobei das Gewichtsverhältnis von mono- und polyfunktionellen Acrylaten und/oder Methacrylaten zu dem oder den Polymeren oder Copolymeren 90:10 bis 60:40, vorzugsweise 85:15 bis 70:30 beträgt.

6. Gießmasse nach einem der vorangehenden Ansprüche, wobei die anorganische Füllstoffpartikel gewählt sind aus SiO₂, Al2O₃, TiO₂, ZrO₂, Fe₂O₃, ZnO, Cr₂O₅, Kohlenstoff, Metallen oder Metalllegierungen.

7. Gießmasse nach einem der vorangehenden Ansprüche, wobei die anorganischen Füllstoffpartikel eine Partikelgröße von 0,010 bis 8000 µm, vorzugsweise 0,05 bis 3000 µm, und insbesondere 0,1 bis 1300 µm aufweisen.

8. Gießmasse nach einem der vorangehenden Ansprüche, wobei die anorganische Füllstoffpartikel ein Seitenverhältnis von Länge zu Breite von 1,0 bis 1000 (Länge : Breite der Einzelpartikel) aufweisen.

9. Gießmasse nach einem der vorangehenden Ansprüche, wobei die Gießmasse eine Viskosität aufweist, die das Einspritzen in eine Form erlaubt.

10. Formkörper, hergestellt unter Verwendung einer Gießmasse nach einem der vorangehenden Ansprüche.

11. Formkörper nach Anspruch 10, wobei der Formkörper eine Küchenspüle, eine Duschwanne, ein Waschtisch, eine Badewanne, eine Arbeitsplatte oder ein Boden-, Wand- oder Deckenpaneel ist.

12. Verfahren zur Herstellung eines Formkörpers nach Anspruch 10 oder 11, bei dem eine Gießmasse nach einem der Ansprüche 1 bis 9 verwendet wird, die in eine Form gegeben wird, in der sie bei gegenüber Raumtemperatur erhöhter Temperatur polymerisiert, wonach der polymerisierte Formkörper der Form entnommen wird und abkühlt.

13. Verfahren nach Anspruch 12, wobei die Temperatur während der Polymerisation zwischen 60 - 140°C, vorzugsweise zwischen 75 - 130°C und insbesondere 80 - 110°C beträgt.

14. Verfahren nach Anspruch 12 oder 13, wobei die Haltezeit, während der die Gießmasse zur Polymerisation in der Form bleibt, zwischen 15 - 50 min, vorzugsweise 20 - 45 min und insbesondere 25 - 35 min beträgt.
